# FASCICULE DE BREVET EUROPEEN

(11) **EP 3 339 877 B1**
(45) Date de publication et mention de la délivrance du brevet: **19.04.2023**
(21) Numéro de dépôt: 17209644.8
(22) Date de dépôt: 21.12.2017
(51) Int. Cl.: G01S 5/14, G01S 1/68, G01S 1/04, B60R 25/24, G01S 5/02

(54) **PROCÉDÉ DE LOCALISATION D'UN TERMINAL UTILISATEUR PAR RAPPORT À UN VÉHICULE AUTOMOBILE**
VERFAHREN ZUR ORTUNG EINES NUTZERENDGERÄTS IM VERHÄLTNIS ZU EINEM KRAFTFAHRZEUG
METHOD FOR LOCATING A USER TERMINAL RELATIVE TO A MOTOR VEHICLE

(30) Priorité: 23.12.2016 FR 1663310
(43) Date de publication de la demande: 27.06.2018
(73) Titulaire: Valeo Comfort and Driving Assistance, 94046 Créteil Cedex (FR)
(72) Inventeur: PETEL, Laurent, 94046 Créteil CEDEX (FR); GUEBLE, Christophe, 94046 Creteil CEDEX (FR)
(74) Mandataire: Delplanque, Arnaud

(56) Documents cités:
- US-A1- 2014 169 564
- US-A1- 2016 320 469
- KALBANDHE ANKUSH A ET AL: "Indoor Positioning System using Bluetooth Low Energy", 2016 INTERNATIONAL CONFERENCE ON COMPUTING, ANALYTICS AND SECURITY TRENDS (CAST), IEEE, 19 décembre 2016 (2016-12-19), pages 451-455, XP033090500, DOI: 10.1109/CAST.2016.7915011
- Joakim Lindh: "Bluetooth Low Energy Beacons", Texas Instruments Application Report SWRA475, 14 janvier 2015 (2015-01-14), XP055181070, Extrait de l'Internet: URL:http://www.ti.com/lit/an/swra475/swra4 75.pdf [extrait le 2015-04-02]

## Description

### DOMAINE TECHNIQUE DE L'INVENTION

La présente invention concerne un procédé de localisation d'un terminal utilisateur par rapport à un véhicule automobile.

La présente invention concerne également un système de localisation d'un terminal utilisateur par rapport à un véhicule automobile associé.

Elle trouve une application particulière mais non limitative dans le domaine des véhicules automobiles.

### ARRIÈRE-PLAN TECHNOLOGIQUE DE L'INVENTION

Dans le domaine des véhicules automobiles, il existe des procédés de localisation d'un terminal utilisateur par rapport à un véhicule automobile. Ces systèmes sont basés sur échanges entre une ou plusieurs unités disposées dans le véhicule et le terminal utilisateur.

Il est connu pour cette localisation d'utiliser des échanges du type basse fréquence ou du type ultra large bande, ultra wide band (UWB) en anglais.

Lorsque le terminal utilisateur est du type smartphone, ce type d'échange n'est pas disponible en standard, et il est donc nécessaire en plus des dispositifs à installer sur le véhicule, de transformer le terminal utilisateur.

La publication de demande de brevet US2016/320469A1 divulgue un système et un procédé de localisation d'un porte-clés par rapport à un véhicule comprenant une étape de détection de signaux sans fil à courte portée communiqués entre le porte-clés et une pluralité de noeuds dans le véhicule à l'aide du protocole IEEE 802.11, une étape de calcul de la distance du porte-clés par rapport à chacun des noeuds attachés au véhicule sur la base du signal sans fil à courte portée détecté, et une étape de détermination de l'emplacement du porte-clés sur la base de la distance du porte-clés par rapport à chacun des noeuds.

### DESCRIPTION GENERALE DE L'INVENTION

A cette fin l'invention propose un procédé de localisation d'un terminal utilisateur par rapport à un véhicule automobile comprenant une pluralité de d'unités électroniques selon la revendication 1.

Ainsi, comme on le verra en détail par la suite, grâce à l'information d'identification secondaire, on peut faire le tri entre les trames d'annonce diffusées pour chaque canal d'annonce de chaque unité électronique. Cela va permettre d'avoir une mesure de puissance en réception de chaque trame d'annonce précise.

Selon un mode de réalisation non limitatif, pour chaque unité électronique, un canal d'annonce est pris comme canal de référence et le procédé de localisation comprend en outre :
- une normalisation dynamique de la mesure de la puissance en réception d'une trame d'annonce d'un canal d'annonce par rapport à la mesure de la puissance en réception d'une trame d'annonce du canal de référence en fonction d'une valeur de compensation.

Selon un mode de réalisation non limitatif, ladite information d'identification secondaire est un compteur, ledit compteur étant incrémenté en fonction du canal d'annonce utilisé.

Selon un mode de réalisation non limitatif, lesdits au moins deux canaux d'annonce sont répartis sur une bande de fréquence de 2,4GHz.

Selon un mode de réalisation non limitatif, le véhicule automobile comprend au moins deux unités électroniques.

Selon un mode de réalisation non limitatif, ledit balayage desdits au moins deux canaux d'annonce s'effectue de façon séquentielle et selon une période secondaire.

Selon un mode de réalisation non limitatif, la diffusion par chaque unité électronique d'une trame d'annonce sur lesdits au moins deux canaux d'annonce s'effectue de façon séquentielle et selon une période primaire inférieure à ladite période secondaire.

Selon un mode de réalisation non limitatif, la période primaire est sensiblement égale à cent millisecondes.

Selon un mode de réalisation non limitatif, selon lequel la période secondaire est sensiblement égale à cinq secondes.

Selon un mode de réalisation non limitatif, le terminal utilisateur est un téléphone mobile, un identifiant, un badge, une tablette.

Selon un mode de réalisation non limitatif, ladite unité électronique est une balise.

Selon un mode de réalisation non limitatif, la détermination de ladite distance et/ou le calcul de la position du terminal utilisateur est effectuée par ledit terminal utilisateur ou une unité électronique dudit véhicule automobile.

Il est également proposé un procédé de diffusion défini selon la revendication 13.

Il est également proposé un terminal utilisateur défini selon la revendication 14.

Selon un mode de réalisation non limitatif, ledit terminal utilisateur est en outre adapté pour :
- pour chaque unité électronique, déterminer la distance à laquelle se trouve ledit terminal utilisateur du véhicule automobile en fonction desdites mesures de puissances en réception et calculer la position du terminal utilisateur par rapport au véhicule automobile en fonction des distances déterminées pour chaque unité électronique ; ou
- envoyer lesdites mesures de puissances en réception à une unité électronique dudit véhicule automobile.

Selon un mode de réalisation non limitatif, pour chaque unité électronique un canal d'annonce est pris comme canal de référence et selon lequel ledit terminal utilisateur est en outre adapté pour effectuer une normalisation dynamique de la mesure de la puissance en réception d'une trame d'annonce d'un canal d'annonce par rapport à la mesure de la puissance en réception d'une trame d'annonce du canal de référence en fonction d'une valeur de compensation.

Il est également proposé une unité électronique définie selon la revendication 17.

### BREVE DESCRIPTION DES FIGURES

L'invention et ses différentes applications seront mieux comprises à la lecture de la description qui suit et à l'examen des figures qui l'accompagnent.
- la figure 1 représente un schéma d'un système de localisation d'un terminal utilisateur par rapport à un véhicule automobile adapté pour mettre en oeuvre un procédé de localisation, selon un mode de réalisation non limitatif de l'invention, ledit système de localisation comprenant une pluralité d'unités électroniques ;
- la figure 2 représente un schéma de trois canaux sur lesquels une trame d'annonce peut être diffusée selon le procédé de localisation de la figure 1, une trame d'annone comprenant une information d'identification secondaire du canal utilisé selon différents modes de réalisation non limitatif ;
- la figure 3 représente un schéma d'un véhicule automobile comprenant une pluralité d'unités électroniques et d'un terminal utilisateur adapté pour recevoir des trames d'annonce à partir desdites unités électroniques;
- la figure 4 représente un schéma d'un procédé de localisation d'un terminal utilisateur par rapport à un véhicule automobile selon un mode de réalisation non limitatif de l'invention et mis en oeuvre par le système de localisation de la figure 1 ;
- la figure 5 représente un schéma illustrant la diffusion de trames d'annonce sur trois canaux différents et de leur réception par un terminal utilisateur selon le procédé de localisation de la figure 4, selon un mode de réalisation non limitatif ; et
- la figure 6 représente un schéma de trames d'annonces diffusée par une unité électronique et reçues par un terminal utilisateur et de leur mesure de puissance en réception réalisée selon le procédé de localisation de la figure 4, selon un mode de réalisation non limitatif.

### DESCRIPTION DE MODES DE REALISATION DE L'INVENTION

Les éléments identiques, par structure ou par fonction, apparaissant sur différentes figures conservent, sauf précision contraire, les mêmes références.

L'invention concerne un procédé de localisation P d'un terminal utilisateur SP par rapport à un véhicule automobile V et un système de localisation SYS associé.

Le procédé localisation P est mis en oeuvre par le système de localisation SYS d'un terminal utilisateur SP par rapport à un véhicule automobile V comprenant une pluralité d'unités électroniques BA, PE, ledit terminal utilisateur SP et les unités électroniques BA, PE étant adaptés pour communiquer selon un protocole de communication Bluetooth Low Energy^{™} référencé BLE. Le protocole BLE permet un échange bidirectionnel de données à très courte distance. Il utilise des ondes radio dite RF sur une bande de fréquence de 2,4GH.

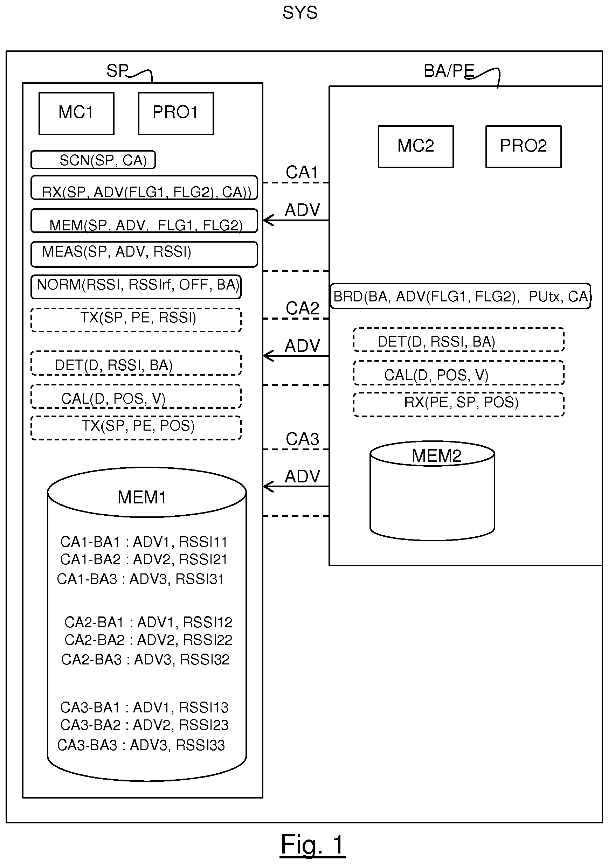

La figure 1 illustre ledit système de localisation SYS.

Le système SYS comprend :
- une pluralité d'unités électroniques BA, PE. Sur la figure 1, une unité électronique BA, PE est représentée ; et
- ledit terminal utilisateur SP.

Pour la suite de la description, on utilisera le terme appareil pour indiquer un terminal utilisateur SP ou une unité électronique BA, PE.

Les éléments dudit système SYS sont décrits en détail ci-après.

Un utilisateur peut contrôler l'exécution d'une fonction Fct au moyen du terminal utilisateur SP. Dans des modes de réalisation non limitatifs, la fonction Fct est un verrouillage/déverrouillage du véhicule automobile V pour accéder audit véhicule automobile V ou un démarrage du véhicule automobile V.

Dans des exemples non limitatifs, le terminal utilisateur SP est identifiant, un badge, une tablette, un téléphone mobile tel que dans un exemple non limitatif un téléphone dit intelligent (« Smartphone en anglais») utilisé par un utilisateur du véhicule automobile V.

Dans un mode de réalisation non limitatif, le terminal utilisateur SP utilise la technologie Bluetooth Low Energy^{™} pour communiquer avec le véhicule automobile V, que ce soit pour l'accès au véhicule, c'est-à-dire pour ouvrir/fermer un ouvrant du véhicule (portière ou coffre), ou pour le démarrage du véhicule. La procédure d'accès à un véhicule automobile ou de démarrage via un terminal utilisateur SP étant bien connue de l'homme du métier, elle n'est pas décrite ici.

Pour des raisons de sécurité, l'exécution d'une fonction Fct du véhicule automobile V est conditionnée par la localisation du terminal utilisateur SP par rapport au véhicule automobile V, à savoir par la distance D à laquelle il se trouve par rapport au véhicule automobile V. Dans un exemple non limitatif, le déverrouillage du véhicule automobile V peut s'effectuer lorsque le terminal utilisateur SP se trouve proche du véhicule automobile V, à une distance sensiblement égale à 50cm (centimètres).

La mesure d'une distance D entre le terminal utilisateur SP et le véhicule automobile V s'effectue au moyen de la mesure de la puissance d'un signal reçu dont la puissance initiale est connue à savoir la puissance à l'émission dudit signal est connue, ce qui permet de déduire la distance entre l'émetteur et le récepteur. L'émetteur est ici une unité électronique BA, PE du véhicule automobile V et le récepteur est le terminal utilisateur SP.

On appelle cette méthode mesure par RSSI (en anglais « Received Signal Strength Indication »). Pour améliorer la mesure de la distance, on utilise une pluralité d'unités électroniques BA, PE et une triangulation est réalisée sur les différentes mesures de puissance des signaux reçus.

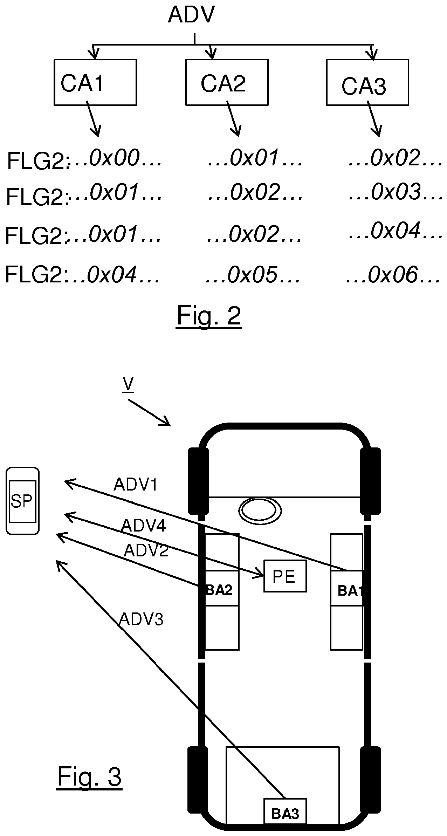

Dans un mode de réalisation non limitatif, l'unité électronique est une balise BA ou une unité électronique centrale PE (appelée également émetteur/récepteur central ou « central transceiver » en anglais) tel qu'illustré sur la figure 3.

Dans un mode de réalisation non limitatif pris dans la suite de la description, trois balises BA1, BA2, BA3 sont utilisées tel qu'illustré sur la figure 3. Les trois balises BA1, BA2, BA3 sont réparties tout autour du véhicule automobile V, une côté droit et une côté gauche du véhicule automobile (par exemple au niveau de chaque portière) et une à l'arrière du véhicule automobile (par exemple dans le coffre ou le hayon du véhicule automobile V). Dans un autre mode de réalisation non limitatif, huit balises sont utilisées. Cela permet de couvrir les angles du véhicule automobile V. Ainsi, on aura dans un exemple non limitatif, une balise côté droit, une côté gauche, une arrière droit, une arrière gauche, une arrière milieu, une avant gauche, une avant droit, une avant milieu.

Comme on va le voir ci-après, les signaux reçus par le terminal utilisateur SP sont des trames d'annonce ADV envoyées par les balises BA.

Tel qu'illustré sur la figure 1, le terminal utilisateur SP comprend :
- un module de communication sans fil MC1. Un module de communication sans fil MC1 comprend ainsi une antenne BLE qui sert d'émetteur/récepteur ;
- une unité de mémorisation MEM1. Dans un exemple non limitatif, l'unité de mémorisation est une mémoire non-volatile réinscriptible EEPROM ;
- un processeur PRO1.

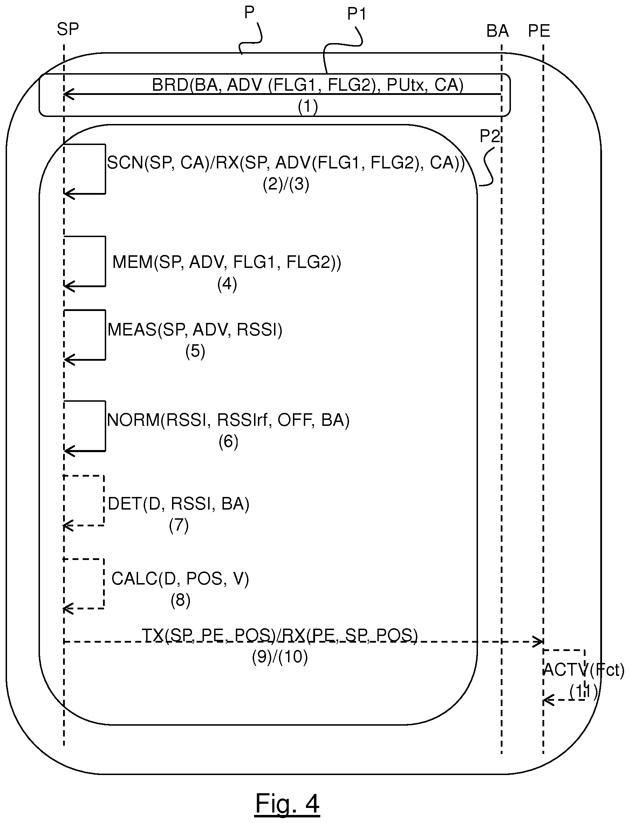

Le processeur PRO1 est adapté pour exécuter des instructions pour la mise en oeuvre d'étapes de balayage, mémorisation, mesure (procédé P2 illustré sur la figure 4) décrites plus loin.

Une balise BA comprend :
- un module de communication sans fil MC2. Un module de communication sans fil MC2 comprend ainsi une antenne BLE qui sert d'émetteur/récepteur ;
- une unité de mémorisation MEM2. Dans un exemple non limitatif, l'unité de mémorisation est une mémoire non-volatile réinscriptible EEPROM ;
- un processeur PRO2.

Le processeur PRO2 est adapté pour exécuter des instructions pour la mise en oeuvre d'une étape de diffusion (procédé P1 illustré sur la figure 4) décrite plus loin.

Le module de communication sans fil MC1 du terminal utilisateur SP permet d'établir une liaison sans fil (ici « Bluetooth Low Energy^{™}») avec le module de communication sans fil MC2 d'une balise BA du véhicule automobile V.

Le module de communication sans fil MC2 de la balise BA est adapté pour être dans un mode diffusion (mode "*advertising*" en technologie Bluetooth). Dans ce cas, il est adapté pour diffuser une pluralité de trames d'annonce ADV au sein de canaux spécifiques, dits canaux d'annonce CA (en anglais "*advertising channels*") distincts des canaux de données (en anglais : "*data channels*") utilisés pour transmettre des trames d'échange de données applicatives relatives à des connexions établies.

Le module de communication sans fil MC1 du terminal utilisateur SP est adapté pour être dans un mode balayage (mode "*scanning*" en technologie Bluetooth). A cet effet, il est adapté pour effectuer un balayage desdits canaux d'annonce CA pour recevoir lesdites trames d'annonce ADV diffusées. Le balayage est séquentiel. Il écoute ainsi un canal d'annonce, puis un autre etc. Il écoute dans l'ordre les canaux d'annonce ou dans le désordre.

Le protocole BLE prévoit 3 canaux d'annonce CA1, CA2, CA3 illustrés sur la figure 1 et la figure 2, référencés canal 37, canal 38 et canal 39 selon le protocole BLE et ayant des fréquences centrales respectives égales à 2402 MHz, 2426 MHz, 2480 MHz, et 37 canaux de données (référencés canal 0 à canal 36). Les trois canaux d'annonce CA1, CA2, CA3 sont répartis sur bande de fréquence de 2,4GHz. Ainsi les 3 canaux d'annonces CA1, CA2, CA3 ont respectivement des fréquences centrales situées à l'extrémité inférieure, dans une région centrale et à l'extrémité supérieure de la bande de fréquence concernée (ici la bande à 2,4 GHz).

Une balise BA est adaptée pour diffuser une pluralité de trames d'annonce ADV au sein d'au moins deux canaux d'annonce CA chaque trame d'annonce AV diffusée comprenant une information d'identification primaire FLG1 d'une balise BA.

Dans un mode de réalisation avantageux chaque trame d'annonce AV diffusée peut également comprendre une information d'identification secondaire FLG2 du canal d'annonce CA utilisé (fonction illustrée sur la figure 1 BRD(BA, ADV(FLG1, FLG2), PUtx, CA).

Dans un mode de réalisation non limitatif, trois canaux d'annonce CA1, CA2, CA3 sont utilisés. Ce mode de réalisation est pris comme exemple non limitatif pour la suite de la description.

Ainsi, tel qu'illustré sur la figure 3 :
- la balise BA1 est adaptée pour diffuser une pluralité de trames d'annonce ADV1 sur les trois canaux d'annonce CA1, CA2 et CA3 ;
- la balise BA2 est adaptée pour diffuser une pluralité de trames d'annonce ADV2 sur les trois canaux d'annonce CA1, CA2 et CA3 ; et
- la balise BA3 est adaptée pour diffuser une pluralité de trames d'annonce ADV3 sur les trois canaux d'annonce CA1, CA2, CA3 illustrés sur la figure 2.

Une balise BA envoie ainsi plusieurs fois une même trame d'annonce ADV séquentiellement sur les trois canaux d'annonce CA1, CA2, CA3. Elle peut le faire dans l'ordre des canaux d'annonce CA1, CA2, CA3 ou dans le désordre. Outre les informations d'identification primaire FLG1 et secondaire FLG2, cette trame d'annonce ADV comporte des informations INF qui indiquent :
- que la balise BA est connectable ou non avec un autre appareil ;
- la puissance à l'émission PUtx de la trame d'annonce ADV ;
- la position de la balise BA sur le véhicule automobile V. Dans des exemples non limitatifs, la position est :
   - avant droit au niveau d'une portière ;
   - avant gauche au niveau d'une portière ;
   - arrière droite au niveau d'une portière ;
   - arrière gauche au niveau d'une portière ;
   - à l'arrière au niveau du coffre ou du hayon ;
   - avant droit au niveau d'un pneu ;
   - avant gauche au niveau d'un pneu;
   - arrière droite au niveau d'un pneu;
   - arrière gauche au niveau d'un pneu etc.

Les trames d'annonce ADV étant connues de l'homme du métier, elles ne sont pas décrites plus en détail.

Dans un mode de réalisation non limitatif, une balise BA est dans un mode dit non connectable, elle ne peut établir de connexion avec le terminal utilisateur SP. Elle se contente de diffuser des trames d'annonce ADV. Elle n'a pas besoin d'entrer en connexion avec le terminal utilisateur SP.

L'information d'identification primaire FLG1 et l'information d'identification secondaire FLG2 permettent au terminal utilisateur SP de trier et mémoriser une trame d'annonce ADV diffusée en fonction de la balise BA qui la diffuse, et du canal d'annonce CA utilisé, à savoir sur laquelle elle est diffusée.

Dans un mode de réalisation non limitatif, l'information d'identification primaire FLG1 est un nombre entre 1 et 3 attribué respectivement à la balise BA1, BA2 et BA3. Ainsi, l'information d'identification primaire FLG1 permet de différencier la balise BA qui diffuse une trame d'annonce ADV.

Dans un mode de réalisation non limitatif, l'information d'identification secondaire FLG2 est un compteur, ledit compteur étant incrémenté en fonction du canal d'annonce CA utilisé. On a ainsi un octet dédié à cet effet dans la trame d'annonce ADV. Ainsi, comme on peut le voir sur la figure 2, dans des modes de réalisation non limitatifs :
- le compteur FLG2 est initialisé à 0 et incrémenté de 1 pour le canal suivant. L'information d'indentification secondaire FLG2 est donc égale à 0x00 en hexadécimal pour le canal CA1, 0x01 pour le canal CA2 et 0x02 pour le canal CA3 ; ou
- le compteur FLG2 est initialisé à 1 et incrémenté de 1 pour le canal suivant. L'information d'indentification secondaire FLG2 est donc égale à 0x01 en hexadécimal pour le canal CA1, 0x02 pour le canal CA2 et 0x03 pour le canal CA3 ; ou
- le compteur FLG2 est initialisé à 1 et incrémenté de 1 pour le canal suivant puis 2 pour le canal suivant. L'information d'indentification secondaire FLG2 est donc égale à 0x01 en hexadécimal pour le canal CA1, 0x02 pour le canal CA2 et 0x04 pour le canal CA3 ; ou
- le compteur FLG2 est initialisé à 4 et incrémenté de 1 pour le canal suivant. L'information d'indentification secondaire FLG2 est donc égale à 0x04 pour le canal CA1, 0x05 pour le canal CA2 et 0x06 pour le canal CA3.

Ainsi, l'information d'identification secondaire FLG2 permet de différencier le canal d'annonce CA sur laquelle une trame d'annonce ADV est diffusée.

Le terminal utilisateur SP est adapté pour balayer lesdits au moins trois canaux d'annonce CA1, CA2, CA3 (fonction illustrée SCN(SP, CA) illustrée à la figure 1) pour recevoir lesdites trames d'annonce ADV (fonction RX(SP, ADV(FLG1, FLG2), CA) illustrée à la figure 1). Ainsi, tel qu'illustré sur la figure 3, il reçoit la pluralité de trames d'annonce ADV1, ADV2, ADV3 diffusées sur les trois canaux d'annonce CA1, CA2, CA3 respectivement par les balises BA1, BA2, BA3 (fonction illustrée sur la figure 1 RX(SP, ADV(FLG1, FLG2), CA). Grâce aux informations d'identification primaire FLG1 et secondaire FLG2, le terminal utilisateur SP peut différencier les différentes trames d'annonce ADV en fonction de la balise BA qui les diffuse et du canal d'annonce CA utilisé pour ladite diffusion.

Le terminal utilisateur SP est ainsi adapté pour mémoriser lesdites trames d'annonce ADV par ledit terminal utilisateur SP en fonction de ladite information d'identification primaire FLG1 et de ladite information d'identification secondaire FLG2 (fonction illustrée sur la figure 1 MEM(SP, ADV, FLG1, FLG2)).

Ainsi, tel qu'illustré sur la figure 1, le terminal utilisateur SP mémorise dans son unité de mémorisation MEM1 :
- a) les trames d'annonce ADV1 reçues de la balise BA1 sur le canal CA1 ;
- b) les trames d'annonce ADV2 reçues de la balise BA2 sur le canal CA1 ;
- c) les trames d'annonce ADV3 reçues de la balise BA3 sur le canal CA1 ;
- d) les trames d'annonce ADV1 reçues de la balise BA1 sur le canal CA2 ;
- e) les trames d'annonce ADV2 reçues de la balise BA2 sur le canal CA2 ;
- f) les trames d'annonce ADV3 reçues de la balise BA3 sur le canal CA2 ;
- g) les trames d'annonce ADV1 reçues de la balise BA1 sur le canal CA3 ;
- h) les trames d'annonce ADV2 reçues de la balise BA2 sur le canal CA3 ;
- i) les trames d'annonce ADV3 reçues de la balise BA3 sur le canal CA3.

Le terminal utilisateur SP est adapté pour mesurer la puissance en réception RSSI des trames d'annonce ADV mémorisées (fonction illustrée sur la figure 1 MEAS(SP, ADV, RSSI)), à savoir la mesure de la puissance en réception RSSI des trames d'annonce ADV de chaque canal d'annonce CA diffusées par chaque balise BA. Dans la suite de la description, les termes mesure de la puissance en réception RSSI ou mesure RSSI seront indifféremment utilisés.

Ainsi, le terminal utilisateur SP effectue une mesure de la puissance en réception RSSI des trames d'annonces ADV reçues telles que mentionnées précédemment selon les §a) à §i). Il effectue un tri de ces mesures RSSI en fonction de la balise BA qui diffuse la trame d'annonce ADV (grâce à l'information d'identification primaire FLG1) et du canal d'annonce CA utilisé (grâce à l'information d'identification secondaire FLG2).

Ainsi tel qu'illustré sur la figure 1, le terminal utilisateur SP mesure et mémorise dans son unité de mémoire MEM1 :
- A) pour la balise BA1 :
   - pour le canal CA1, une mesure de puissance en réception RSS11 ;
   - pour le canal CA2, une mesure de puissance en réception RSS12 ;
   - pour le canal CA3, une mesure de puissance en réception RSS13.
- B) pour la balise BA2 :
   - pour le canal CA1, une mesure de puissance en réception RSS21 ;
   - pour le canal CA2, une mesure de puissance en réception RSS22 ;
   - pour le canal CA3, une mesure de puissance en réception RSS23.
- C) pour la balise BA3 :
   - pour le canal CA1, une mesure de puissance en réception RSS31 ;
   - pour le canal CA2, une mesure de puissance en réception RSS32 ;
   - pour le canal CA3, une mesure de puissance en réception RSS33.

On notera que la puissance à l'émission PUtx varie selon les canaux d'annonce CA utilisé pour une même distance D donnée. Aussi, lorsque le terminal utilisateur SP écoute les trois canaux CA1, CA2, CA3, même s'il ne bouge pas et qu'il est à une même distance D, dans un exemple non limitatif de 40cm, la puissance en réception mesurée RSSI varie d'un canal d'annonce CA à un autre. Ainsi, par exemple pour une même trame d'annonce ADV1 envoyée par la balise BA1, le terminal utilisateur SP effectue une première mesure de la puissance en réception RSSI11 sur le canal d'annonce CA1, une deuxième mesure de la puissance en réception RSSI12 sur le canal d'annonce CA2, et une troisième mesure de la puissance en réception RSSI13 sur le canal d'annonce CA3, les trois mesures de la puissances en réception RSSI11, RSSI12, RSSI13 étant différentes les unes des autres.

Ainsi, sans l'information d'identification secondaire FLG2, même si le terminal utilisateur SP se trouve à une distance donnée D, il ne serait pas possible de savoir précisément à quelle distance il se trouve par rapport au véhicule automobile V, car en raison de la dispersion des puissances à l'émission PUtx et donc des mesures de la puissance en réception RSSI, on pourrait croire que le terminal utilisateur SP bouge et que la distance D à laquelle il se trouve du véhicule automobile V varie.

Dans un mode de réalisation non limitatif, pour chaque balise BA1, BA2, BA3, un canal d'annonce CA est pris comme canal de référence CArf.

Le terminal utilisateur SP est en outre adapté pour effectuer une normalisation dynamique de la mesure de la puissance en réception RSSI d'une trame d'annonce ADV d'un canal d'annonce CA par rapport à la mesure de la puissance en réception RSSIrf d'une trame d'annonce ADV du canal de référence CArf en fonction d'une valeur de compensation OFF (fonction illustrée sur la figure 1 NORM(RSSI, RSSIrf, OFF, BA)). Cette normalisation est décrite plus en détail plus loin.

Par la suite, la distance D à laquelle se trouve ledit terminal utilisateur SP du véhicule automobile V peut être déterminée pour chaque balise BA en fonction des mesures des puissances en réception RSSI (fonction illustrée sur la figure 1 DET(D, RSSI, BA)), et notamment en fonction des mesures de puissance en réception RSSI normalisées. On connaît ainsi à quelle distance D se trouve le terminal utilisateur SP de la balise BA1, à quelle distance D il se trouve de la balise BA2 et à quelle distance D il se trouve de la balise BA3. Cette détermination est effectuée en fonction d'une courbe de calibration qui indique pour une valeur de distance donnée quelle est la puissance à l'émission PUtx et quelle est la mesure de la puissance en réception RSSI correspondante. On rappelle que lorsque l'émetteur se trouve au même endroit que le récepteur, la puissance à l'émission PUtx est égale à la mesure de puissance en réception RSSI. On rappelle que lorsque l'on double la distance D, on observe une perte sensiblement égale à -8db pour la mesure de puissance en réception RSSI.

Dans un mode de réalisation non limitatif, cette détermination est effectuée par le terminal utilisateur SP ou par l'unité électronique centrale PE du véhicule automobile V illustrée sur la figure 3.

Enfin, la position POS du terminal utilisateur SP par rapport au véhicule automobile V est déterminée en fonction des distances D déterminées de chaque balise BA (fonction illustrée sur la figure 1 CAL(D, POS, V)). Dans un mode de réalisation non limitatif, la position POS est déterminée selon une méthode de triangulation bien connue de l'homme du métier. Dans un mode de réalisation non limitatif, cette détermination est effectuée par le terminal utilisateur SP ou par l'unité électronique centrale PE

On notera que l'unité électronique centrale PE est adaptée pour communiquer avec le terminal utilisateur SP via le protocole BLE. Cette unité électronique centrale PE est adaptée pour être dans le mode diffusion ou dans le mode balayage. Outre les trames de diffusion, il peut donc échanger des trames de données sur les 37 canaux de données avec le terminal utilisateur SP.

L'unité électronique PE est dans un mode dit connectable car elle peut établir une connexion avec le terminal utilisateur SP. L'unité électronique centrale PE est adaptée pour :
- valider l'authentification du terminal utilisateur SP qui permet d'exécuter la fonction Fct ;
- activer la fonction à exécuter Fct tel que le verrouillage/déverrouillage du véhicule automobile, le démarrage du véhicule automobile etc.

Dans le cas où la détermination de la distance D à laquelle se trouve ledit terminal utilisateur SP du véhicule automobile V est effectuée par l'unité électronique centrale PE, dans un mode de réalisation non limitatif, le terminal utilisateur SP est en outre adapté pour envoyer lesdites mesures de puissances en réception RSSI à ladite unité électronique centrale PE dudit véhicule automobile V pour qu'elle détermine pour chaque balise BA la distance D à laquelle se trouve ledit terminal utilisateur SP du véhicule automobile V (fonction illustrée sur la figure 1 TX(SP, PE, RSSI)). Cette fonction étant un mode de réalisation non limitatif, elle est illustrée en pointillés sur la figure 1.

Dans des modes de réalisation non limitatifs, l'unité électronique centrale PE est en outre adaptée pour effectuer la normalisation dynamique et/ou le calcul de la position POS du terminal utilisateur SP par rapport au véhicule automobile V.

Le système de localisation SYS décrit permet ainsi de mettre en oeuvre le procédé de localisation P d'un terminal utilisateur SP par rapport à un véhicule automobile V comprenant une pluralité de balises BA, ledit terminal utilisateur SP et les balises BA étant adaptés pour communiquer selon un protocole de communication Bluetooth Low Energy^{™}.

Les étapes du procédé de localisation P sont décrites ci-après en référence aux figures 4 à 6.

On notera qu'au préalable, une étape d'authentification du terminal utilisateur SP auprès de l'unité électronique PE du véhicule automobile V s'est effectuée (non illustrée) et ladite authentification a été validée.

Selon le mode de réalisation non limitatif illustré sur la figure 4, le terminal utilisateur SP effectue pour chaque unité électronique BA la détermination de la distance D à laquelle se trouve ledit terminal utilisateur SP, le calcul de sa position en fonction de ces distances D déterminée.

**Selon l'étape 1)** illustrée BRD(BA, ADV (FLG1, FLG2), PUtx, CA), chaque balise BA diffuse une pluralité de trames d'annonce ADV au sein d'au moins deux canaux d'annonce CA, chaque trame d'annonce ADV diffusée comprenant une information d'identification primaire FLG1 d'une balise BA et une information d'identification secondaire FLG2 du canal d'annonce CA utilisé. Les trames d'annonce ADV envoyées par une même balise BA sur les au moins deux canaux d'annonce CA sont identiques, à savoir elles comportent les mêmes informations INF mises à part l'information d'identification secondaire FLG2. Dans l'exemple non limitatif illustré, trois canaux d'annonce CA1, CA2, CA3 sont utilisés.

La diffusion des trames d'annonce ADV s'effectue régulièrement. Une balise BA envoie ainsi une même trame d'annonce ADV plusieurs fois sur lesdits au moins trois canaux d'annonce CA. Ainsi, dans un mode de réalisation non limitatif, la diffusion par chaque balise BA d'une trame d'annonce ADV sur lesdits canaux d'annonce CA s'effectue de façon séquentielle et selon une période primaire T1. Dans un exemple non limitatif, la période primaire T1 est sensiblement égale à 100ms (millisecondes), plus ou moins 10ms. Ces 100ms permettent d'éviter une collision entre les différentes trames d'annonce ADV diffusées. Ainsi, toutes les 100ms, une même trame d'annonce ADV est diffusée sur un canal d'annonce CA différent.

Dans un mode de réalisation non limitatif, la diffusion d'une trame d'annonce ADV s'effectue selon un temps sensiblement égal à 3ms.

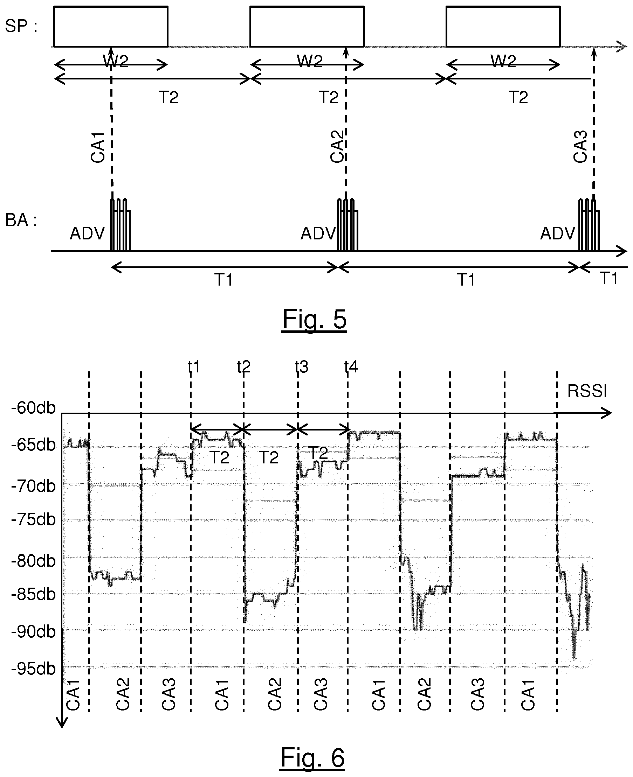

Ainsi, tel qu'illustré sur la figure 5, une balise BA envoie sur trois périodes primaires T1, une trame d'annonce ADV sur le canal CA1, puis la même trame d'annonce ADV sur le canal CA2, et enfin la même trame d'annonce ADV sur le canal CA3.

**Selon l'étape 2)** illustrée SCN(SP, CA), le terminal utilisateur SP balaye lesdits trois canaux d'annonce CA pour recevoir lesdites trames d'annonce ADV diffusées.

Le balayage des canaux d'annonces CA s'effectue régulièrement. Ainsi, dans un mode de réalisation non limitatif, le balayage des canaux d'annonce CA s'effectue selon une période secondaire T2. Dans un exemple non limitatif, la période secondaire T2 est égale à 5s (secondes).

On remarquera que la période primaire T1 pour diffuser les trames d'annonce ADV sur les canaux d'annonce CA est inférieure à la période secondaire T2 pour balayer lesdits canaux d'annonce CA. Cela permet au terminal utilisateur SP d'être sûr de recevoir les trames d'annonces diffusées ADV sur un canal d'annonce CA donné.

Ainsi, tel qu'illustré sur la figure 5, le terminal utilisateur SP balaye les trois canaux d'annonce CA1, CA2, CA3 sur trois périodes secondaires T2, le canal CA1, puis le canal CA2, et enfin le canal CA3.

On notera que l'écoute réelle d'un canal d'annonce s'effectue sur une durée d'écoute W2 sensiblement inférieure à la période secondaire T2 de balayage tel qu'illustré sur la figure 5. La durée d'écoute peut être variable. Dans un mode de réalisation non limitatif, elle est de 4,99s. Dans un mode de réalisation non limitatif, la différence entre W2 et T2 peut varier entre 5ms et 10ms.

On notera que dans un mode de réalisation non limitatif, la diffusion par chaque balise BA de la pluralité de trames d'annonce ADV au sein des trois canaux d'annonce CA et le balayage desdits trois canaux d'annonce CA sont désynchronisés comme on peut le voir sur la figure 5. On remarquera que sur le schéma de la figure 5 les périodes T1 et T2 ne sont pas à la même échelle.

**Selon l'étape 3)** illustrée RX(SP, ADV(FLG1, FLG2), CA), le terminal utilisateur SP reçoit lesdites trames d'annonce ADV diffusées. Chaque trame d'annonce ADV diffusée comprend une information d'identification primaire FLG1 et une information d'identification secondaire FLG2 comme décrit précédem ment.

**Selon l'étape 4)** illustrée MEM(SP, ADV, FLG1, FLG2), le terminal utilisateur SP mémorise lesdites trames d'annonce ADV en fonction de ladite information d'identification primaire FLG1 et de ladite information d'identification secondaire FLG2.

Ainsi, il mémorise les trames d'annonce ADV1, ADV2, ADV3 des balises BA1, BA2, BA3 diffusées sur les canaux CA1, CA2, CA3 telles que citées dans les §a à i précédemment.

**Selon l'étape 5)** illustrée MEAS(SP, ADV, RSSI), le terminal utilisateur SP mesure la puissance en réception RSSI desdites trames d'annonce ADV mémorisées.

Ainsi, il mesure les puissances en réception RSSI11, RSSI12, RSSI13, et RSSI21, RSSI22, RSSI23, et RSSI31, RSSI32, RSSI33 telles que citées précédemment dans les §A à C).

On rappelle qu'en raison des variations des puissances à l'émission d'une trame d'annonce ADV qui dépend du canal d'annonce CA utilisé, la sensibilité à la réception du terminal utilisateur SP d'une trame d'annonce ADV varie en fonction du canal d'annonce CA utilisé pour la diffusion. Aussi, suite à la mesure de la puissance en réception RSSI desdites trames d'annonce ADV mémorisées, dans un mode de réalisation non limitatif, le terminal utilisateur peut effectuer pour chaque canal d'annonce CA de chaque balise BA une compensation d'une mesure de la puissance en réception RSSI mémorisée.

A cet effet, le terminal utilisateur SP compare ladite puissance mesurée en réception RSSI avec une puissance théorique correspondant à une distance déterminée au moyen d'une courbe de régression de puissance en fonction de la distance (appelée également courbe de régression ou courbe RSSI « Received Signal Strength Indication »). En abscisse, on trouve la distance (en centimètres), en ordonnée, on trouve la puissance (en décibels). S'il existe un décalage entre ladite puissance mesurée RSSI et ladite puissance théorique, le terminal utilisateur SP compense ladite puissance mesurée RSSI en fonction de ce décalage. Une courbe de régression est associée à chaque balise BA et chaque canal d'annonce CA. Dans l'exemple non limitatif de trois balises BA1, BA2 et BA3 et de trois canaux d'annonce CA1, CA2, CA3, on a donc six courbes de régression. Ainsi, grâce aux informations d'identification primaire FLG1 et secondaire FLG2, on sait quelle courbe de régression utiliser pour déterminer de façon précise la mesure de la puissance en réception RSSI de chaque trame d'annonce ADV diffusée par une balise BA donnée et sur un canal d'annonce CA donné. Ainsi, on peut effectuer une corrélation de mesure entre la puissance en réception RSSI et le canal d'annonce CA sur lequel est diffusée une trame d'annonce ADV.

On rappelle que la puissance à l'émission PUtx d'une même trame d'annonce ADV diffusée par une même balise BA varie d'un canal d'annonce CA à un autre CA pour une même distance D donnée. Aussi, maintenant que les trames d'annonce ADV ont été triées en fonction de chaque canal d'annonce CA, pour connaître avec précision la distance D à laquelle le terminal utilisateur SP se trouve par rapport au véhicule automobile V, l'étape suivante est effectuée.

Pour chaque balise BA1, BA2, BA3, un canal d'annonce CA est pris comme canal de référence CArf, et
**selon l'étape 6)** illustrée NORM(RSSI, RSSIrf, OFF, BA), le terminal utilisateur SP effectue une normalisation dynamique de la mesure de la puissance en réception RSSI d'une trame d'annonce ADV d'un canal d'annonce CA par rapport à la mesure de la puissance en réception RSSIrf d'une trame d'annonce ADV du canal de référence CArf en fonction d'une valeur de compensation OFF.

Dans un mode de réalisation non limitatif, le canal de référence CArf est le canal 37. On notera que ce canal 37 est moins utilisé par les autres protocoles de communication (tel que le WIFI ou ZigBee) qui utilisent la même bande de fréquence à 2,4GHz et donc aura moins de perturbations. La mesure de la puissance en réception RSSI sera donc plus fiable.

Dans d'autres modes de réalisation non limitatifs, le canal de référence CArf est le canal 38 ou 39.

On notera que la normalisation est effectuée à chaque changement de canal d'annonce CA, à savoir à chaque fois que le terminal utilisateur SP balaye un nouveau canal d'annonce CA, et ce pour chaque balise BA. La normalisation est ainsi dynamique puisque la valeur de compensation OFF peut varier à chaque changement de canal d'annonce CA. Autrement dit, on a une compensation dynamique de valeur de compensation OFF à chaque changement de canal d'annonce CA.

Ainsi, dans un mode de réalisation non limitatif, la valeur de compensation OFF est égale à la différence entre la mesure de la puissance en réception RSSIrf d'une trame d'annonce ADV du canal de référence CArf et la mesure de la mesure de la puissance en réception RSSI d'une trame d'annonce ADV d'un canal d'annonce CA.

Ainsi, tel dans l'exemple non limitatif illustré sur la figure 5, pour une balise BA :
- le canal d'annonce 37 (à savoir le canal CA1) est pris comme canal d'annonce de référence CArf. Dans l'intervalle t1-t2 qui dure une période secondaire T2 (à savoir 5s dans l'exemple non limitatif pris), la moyenne des mesures de la puissance en réception RSSIrf d'une même trame d'annonce ADV diffusée plusieurs fois sur le canal d'annonce 37 est sensiblement égale à -64db ;
- a) dans l'intervalle t2-t3 qui dure une période secondaire T2, la moyenne des mesures de la puissance en réception RSSI d'une même trame d'annonce ADV diffusée plusieurs fois sur le canal d'annonce 38 (à savoir le canal CA2) est sensiblement égale à -85db. On peut voir que lors du passage du canal d'annonce 37 au canal d'annonce 38, on perd 20db ;
- b) dans l'intervalle t3-t4 qui dure une période secondaire T2, la moyenne des mesures de la puissance en réception RSSI d'une même trame d'annonce ADV diffusée plusieurs sur le canal d'annonce 39 (à savoir le canal CA3) est sensiblement égale à -67db. Lors du passage du canal d'annonce 37 au canal d'annonce 39, on perd 3db.

Pour le cas a), la valeur de compensation OFF est égale à +21 db. On aura donc une normalisation des mesures de la puissance en réception RSSI de +21db. Autrement dit, on ajoute +21db à -85db. On obtient alors -64db.

Pour le cas b), la valeur de compensation OFF est égale à +3db. On aura donc une normalisation des mesures de la puissance en réception RSSI de +3db. Autrement dit, on ajoute +3db à -67db. On obtient alors -64db.

Dans un mode de réalisation non limitatif, le procédé de localisation P peut en outre comprendre une calibration statique des mesures de la puissance en réception RSSI des trames d'annonces ADV diffusées sur les trois canaux d'annonce 37, 38, 39. Cette calibration statique peut se faire en fonction du gain des antennes BLE des modules de communication MC2 des balises BA qui peut être différent et/ou en fonction du chemin parcouru par les ondes radio émises par lesdites antennes pour envoyer lesdites trames d'annonce ADV etc.

Ainsi, suite à ladite normalisation dynamique, selon une étape 7) illustrée DET(D, RSSI, BA), on détermine la distance D à laquelle se trouve ledit terminal utilisateur SP du véhicule automobile V en fonction des mesures des puissances en réception RSSI, et plus particulièrement en fonction des mesures des puissances en réception RSSI normalisées. Cette détermination est effectuée pour chaque balise BA. Ainsi, dans l'exemple non limitatif donné, on aura trois distances D déterminées.

Ainsi, dans un exemple non limitatif, les mesures des puissances en réception RSSI normalisées sont sensiblement égales à -64db,. Dans un mode de réalisation non limitatif, cette détermination est effectuée par le terminal utilisateur SP comme illustrée sur la figure 4.

**Selon une étape 8)** illustrée CALC(D, POS, V), le terminal utilisateur SP calcule sa position POS par rapport au véhicule automobile V en fonction des distances D déterminées par rapport à chaque balise BA. A cet effet, le calcul de la position est effectué par triangulation

La triangulation permet d'avoir une localisation plus précise du terminal utilisateur SP.

En effet, elle permet de résoudre les problèmes de précisions de mesures de puissance en réception RSSI ci-après.

Une mesure de puissance en réception RSSI varie alors que l'utilisateur se trouve à une même distance D du véhicule automobile V, et ce en fonction :
- a) de la position où se trouve l'utilisateur et donc le terminal utilisateur SP par rapport au véhicule automobile V. En fonction de la position, les ondes radio doivent traverser plus ou moins le corps humain. En effet, à la fréquence de 2,4GHz, les ondes radio RF sont atténuées par le corps humain contrairement à des ondes radio basse fréquence à125kHz ;
- b) de la manière dont tient l'utilisateur le terminal utilisateur SP ;
- c) de l'antenne BLE du module de communication sans fil MC1 qui est non isotrope car elle ne rayonne pas uniformément dans toutes les directions.

a) Ainsi, par exemple si l'utilisateur porte le terminal utilisateur SP de telle manière que le terminal utilisateur SP se trouve entre l'utilisateur et le véhicule automobile V (par exemple l'utilisateur est face au véhicule automobile V et porte son terminal utilisateur SP devant lui), la mesure de puissance en réception RSSI sera par exemple égale à -60db tandis que si l'utilisateur porte le terminal utilisateur SP de telle manière que son corps se trouve entre le terminal utilisateur SP et le véhicule automobile V (par exemple l'utilisateur est dos au véhicule automobile V et porte son terminal utilisateur SP devant lui), la mesure de puissance en réception RSSI sera par exemple égale à -70db, les ondes radio émises/reçues (pour diffuser une trame d'annonce ADV) par le terminal utilisateur SP devant dans ce cas traverser le corps humain.
b) Ainsi, par exemple selon que l'utilisateur tient le terminal utilisateur SP dans sa main proche de son oreille, dans sa main en regardant l'écran, dans une poche arrière, avant etc., la mesure RSSI pourra être différente.
c) L'antenne BLE est non isotrope de manière à ce que les ondes radio soient atténuées lorsque le terminal utilisateur SP est collé à l'oreille de l'utilisateur pour une question de sécurité.

Ainsi, dans un exemple non limitatif, il peut y avoir une variation de 10db en raison du corps humain, et/ou en raison de la tenue en main du terminal utilisateur SP, et/ou en raison de l'antenne BLE. On peut ainsi avoir au total une variation de 30db. Ainsi, si par exemple le terminal utilisateur SP se trouve à 1m du véhicule automobile V, on peut croire qu'il se trouve cinq fois plus loin, à savoir à 5m.

Ainsi, toutes ces raisons entraînent un manque de précision dans la localisation du terminal utilisateur SP par rapport au véhicule automobile V qui est surmonté grâce à la triangulation.

On notera qu'en plus des ces mesures de puissance en réception RSSI qui varient, un autre problème est résolu par la triangulation qui est celui de la difficulté à déterminer la distance D à laquelle se trouve un véhicule automobile du fait des ondes radio RF envoyées à la fréquence de 2,4GHz. En effet, pour une onde radio RF à la fréquence de 2,4GHz, lorsque l'on double la distance D, on observe une perte sensiblement égale à -8db pour la mesure RSSI. Par exemple lorsque l'on passe de 1m à 2m de distance du véhicule automobile V, la pente entre la distance en mètres et la mesure RSSI est faible. On a du mal à savoir si on est à 1m ou 2m du véhicule automobile V, contrairement à des ondes radio basse fréquence BF à 125KHz par exemple où on observe dans ce cas une perte de -18db. La précision des mesures de puissance en réception RSSI à 2,4GHz est trois fois plus mauvaise que pour des mesures de puissance en réception RSSI à 125KHz. Aussi, la triangulation permet de résoudre ce problème de précision.

**Selon une étape 9)** illustrée TX(SP, PE, POS), le terminal utilisateur SP envoie la position POS calculée à l'unité électronique centrale PE, qui la reçoit **selon l'étape 10)** illustrée RX(PE, SP, POS).

**Selon une étape 11)** illustrée ACTV(Fct), en fonction de la position POS ainsi calculée, la fonction Fct est activée ou non. Ainsi, si la distance déterminée D est inférieure ou égale à la distance seuil Ds, le verrouillage/déverrouillage du véhicule automobile V ou encore son démarrage est activé. Dans un mode de réalisation non limitatif, l'activation de ladite fonction Fct est effectuée par l'unité électronique centrale PE.

Ainsi, le procédé de localisation P permet de déterminer la distance D à laquelle se trouve le terminal utilisateur SP par rapport au véhicule automobile V, de façon précise.

Bien entendu, dans un autre mode de réalisation non limitatif, les étapes 6, 7, 8 peuvent être effectuées par l'unité électronique centrale PE. Dans ce cas il n'y a pas d'étapes 9 et 10. Dans ce cas, le procédé de localisation P comprend en outre l'envoi par le terminal utilisateur SP desdites mesures de puissances en réception RSSI à ladite unité électronique centrale PE pour qu'elle détermine pour chaque balise BA la distance D à laquelle se trouve ledit terminal utilisateur SP du véhicule automobile V.

Tel qu'illustré sur la figure 4, l'invention concerne également un procédé de diffusion P1 par une pluralité de balises BA de trames d'annonce ADV, lesdites balises BA et ledit terminal utilisateur SP étant adaptés pour communiquer selon un protocole de communication Bluetooth Low Energy^{™} BLE, selon lequel ledit procédé de diffusion P1 comprend :
- une diffusion par chaque balise BA d'une pluralité de trames d'annonce ADV au sein d'au moins trois canaux d'annonce CA, chaque trame d'annonce ADV diffusée comprenant une information d'identification primaire FLG1 d'une balise BA et une information d'identification secondaire FLG2 du canal d'annonce CA utilisé.

Bien entendu la description de l'invention n'est pas limitée à l'application, aux modes de réalisation et aux exemples décrits ci-dessus.

Ainsi, dans un mode de réalisation non limitatif où les balises BA sont positionnées dans les pneus, elles peuvent être utilisées pour une application TPMS nommée en anglais « Tire Pressure Monitoring System » qui donne des informations sur la pression du pneu.

Ainsi, dans un autre mode de réalisation non limitatif, la fonction Fct exécutée est un parking automatique du véhicule automobile V.

Ainsi, dans un autre mode de réalisation non limitatif, le processus d'identification d'un canal d'annonce (et donc l'utilisation de l'information d'identification secondaire FLG2 dans une trame d'annonce ADV) peut être utilisé pour des applications autres qu'une localisation d'un terminal utilisateur SP, dans le cadre d'échanges BLE entre un émetteur et un récepteur. Elle peut ainsi être utilisée pour tout procédé de communication entre un terminal utilisateur et une unité électronique BA, PE adaptés pour communiquer selon un protocole de communication Bluetooth Low Energy^{™} BLE, ledit procédé de localisation P comprenant :
- une diffusion par chaque unité électronique BA, PE d'une pluralité de trames d'annonce ADV au sein d'au moins deux canaux d'annonce CA, chaque trame d'annonce ADV diffusée comprenant une information d'identification primaire FLG1 d'une unité électronique BA, PE et une information d'identification secondaire FLG2 du canal d'annonce CA utilisé ;
- un balayage desdits au moins deux canaux d'annonce CA par ledit terminal utilisateur SP pour recevoir lesdites trames d'annonce ADV diffusées ;
- une mémorisation desdites trames d'annonce ADV par ledit terminal utilisateur SP en fonction de ladite information d'identification primaire FLG1 et de ladite information d'identification secondaire FLG2.

Dans un mode de réalisation non limitatif, ce procédé peut comprendre en outre :
- une mesure de la puissance en réception RSSI par ledit terminal utilisateur SP desdites trames d'annonce ADV mémorisées.

Ainsi, l'invention décrite présente notamment les avantages suivants :
- elle est simple à mettre en oeuvre ;
- elle permet de résoudre le problème de dispersion de mesures de puissance en réception sur les différents canaux d'annonce CA ;
- elle permet d'utiliser des terminaux utilisateurs SP qui sont des téléphones mobiles et qui n'ont pas de système embarqué de localisation BF ;
- elle permet de rendre plus précis un système de localisation à 2,4GHz.

## Revendications

1. Procédé de localisation (P) d'un terminal utilisateur (SP) par rapport à un véhicule automobile (V) comprenant une pluralité d'unités électroniques (BA, PE), ledit terminal utilisateur (SP) et les unités électroniques (BA, PE) étant adaptés pour communiquer selon un protocole de communication Bluetooth Low Energy^{™}(BLE), selon lequel ledit procédé de localisation (P) comprend :
- une diffusion par chaque unité électronique (BA, PE) d'une pluralité de trames d'annonce (ADV) au sein d'au moins deux canaux d'annonce (CA), chaque trame d'annonce (ADV) diffusée comprenant une information d'identification primaire (FLG1) d'une unité électronique (BA, PE) ;
- un balayage desdits au moins deux canaux d'annonce (CA) par ledit terminal utilisateur (SP) pour recevoir lesdites trames d'annonce (ADV) diffusées ;
- une mémorisation desdites trames d'annonce (ADV) par ledit terminal utilisateur (SP) en fonction de ladite information d'identification primaire (FLG1) ;
- une mesure de la puissance en réception (RSSI) par ledit terminal utilisateur (SP) desdites trames d'annonce (ADV) mémorisées ;
- pour chaque unité électronique (BA, PE), une détermination de la distance (D) à laquelle se trouve ledit terminal utilisateur (SP) du véhicule automobile (V) en fonction desdites mesures de puissances en réception (RSSI) ;
- un calcul de la position (POS) du terminal utilisateur (SP) par rapport au véhicule automobile (V) en fonction des distances (D) déterminées pour chaque unité électronique (BA, PE) **caractérisé en ce que** chaque trame d'annonce (ADV) diffusée comprend également une information d'identification secondaire (FLG2) du canal d'annonce (CA) utilisé et **en ce que** ledit terminal utilisateur (SP) mémorise également lesdites trames d'annonce (ADV) en fonction de ladite information d'identification secondaire (FLG2).

2. Procédé de localisation (P) selon la revendication 1, selon lequel pour chaque unité électronique (BA, PE), un canal d'annonce (ADV) est pris comme canal de référence (CArf) et le procédé de localisation (P) comprend en outre :
- une normalisation dynamique de la mesure de la puissance en réception (RSSI) d'une trame d'annonce (ADV) d'un canal d'annonce (CA) par rapport à la mesure de la puissance en réception (RSSIrf) d'une trame d'annonce (ADV) du canal de référence (CArf) en fonction d'une valeur de compensation (OFF).

3. Procédé de localisation (P) selon la revendication 1 ou 2, selon lequel ladite information d'identification secondaire (FLG2) est un compteur, ledit compteur étant incrémenté en fonction du canal d'annonce (CA) utilisé.

4. Procédé de localisation (P) selon l'une quelconque des revendications précédentes 1 à 3, selon lequel lesdits au moins deux canaux d'annonce (CA) sont répartis sur une bande de fréquence de 2,4GHz.

5. Procédé de localisation (P) selon l'une quelconque des revendications précédentes 1 à 4, selon lequel le véhicule automobile comprend au moins deux unités électroniques (BA, PE).

6. Procédé de localisation (P) selon l'une quelconque des revendications précédentes 1 à 5, selon lequel ledit balayage desdits au moins deux canaux d'annonce (CA) s'effectue de façon séquentielle et selon une période secondaire (T2).

7. Procédé de localisation (P) selon la revendication 6, selon lequel la diffusion par chaque unité électronique (BA, PE) d'une trame d'annonce (ADV) sur lesdits au moins canaux d'annonce (CA) s'effectue de façon séquentielle et selon une période primaire (T1) inférieure à ladite période secondaire (T2).

8. Procédé de localisation (P) selon la revendication 7, selon lequel la période primaire (T1) est sensiblement égale à cent millisecondes.

9. Procédé de localisation (P) selon la revendication 7 ou la revendication 8, selon lequel la période secondaire (T2) est sensiblement égale à cinq secondes.

10. Procédé de localisation (P) l'une quelconque des revendications précédentes 1 à 9, selon lequel le terminal utilisateur (SP) est un téléphone mobile, un identifiant, un badge, une tablette.

11. Procédé de localisation (P) l'une quelconque des revendications précédentes 1 à 10, selon lequel ladite unité électronique (BA) est une balise.

12. Procédé de localisation (P) l'une quelconque des revendications précédentes 1 à 11, selon lequel la détermination de ladite distance (D) et/ou le calcul de la position (POS) du terminal utilisateur (SP) est effectuée par ledit terminal utilisateur (SP) ou une unité électronique (PE) dudit véhicule automobile (V).

13. Procédé de diffusion (P1) d'une pluralité de trames d'annonce (ADV) par une pluralité d'unités électroniques (BA, PE), chaque unité électronique étant adaptée pour communiquer avec un terminal utilisateur (SP) selon un protocole de communication Bluetooth Low Energy^{™}(BLE) pour mettre en oeuvre un procédé de localisation selon la revendication 1, selon lequel ledit procédé de diffusion (P1) comprend :
- une diffusion par chaque unité électronique (BA, PE) d'une pluralité de trames d'annonce (ADV) au sein d'au moins deux canaux d'annonce (CA), chaque trame d'annonce (ADV) diffusée comprenant une information d'identification primaire (FLG1) d'une unité électronique (BA, PE) et une information d'identification secondaire (FLG2) du canal d'annonce (CA) utilisé.

14. Terminal utilisateur (SP) adapté pour communiquer selon un protocole de communication Bluetooth Low Ernergy (BLE) avec une pluralité d'unités électroniques (BA, PE) d'un véhicule automobile (V), le terminal utilisateur (SP) comprenant:
- un module de communication sans fil (MC1), qui comprend une antenne servant d'émetteur/récepteur ;
- une unité de mémorisation (MEM1) ; et
- un processeur (PRO1) ;
le terminal utilisateur (PRO1) étant adapté pour:
- balayer au moins deux canaux d'annonce (CA) pour recevoir des trames d'annonce (ADV) diffusées sur lesdits au moins deux canaux d'annonce (CA), chaque trame d'annonce (ADV) diffusée comprenant une information d'identification primaire (FLG1) d'une unité électronique (BA, PE);
- mémoriser lesdites trames d'annonce (ADV) en fonction de ladite information d'identification primaire (FLG1) ;
- mesurer la puissance reçue (RSSI) des trames d'annonce (ADV) de chaque canal d'annonce (CA)
**caractérisé en ce que** ledit terminal utilisateur (SP) est en outre adapté pour :
- mémoriser lesdites trames d'annonce (ADV) également en fonction d'une information d'identification secondaire (FLG2) du canal d'annonce (CA) utilisé, diffusée dans lesdites trames d'annonces (ADV) en plus de ladite information d'identification primaire (FLG1)

15. Terminal utilisateur (SP) selon la revendication 14, selon lequel ledit terminal utilisateur (SP) est en outre adapté pour :
- pour chaque unité électronique (BA, PE), déterminer la distance (D) à laquelle se trouve ledit terminal utilisateur (SP) du véhicule automobile (V) en fonction desdites mesures de puissances en réception (RSSI) et calculer la position (POS) du terminal utilisateur (SP) par rapport au véhicule automobile (V) en fonction des distances (D) déterminées pour chaque unité électronique (BA, PE) ; ou
- envoyer lesdites mesures de puissances en réception (RSSI) à une unité électronique (UE) dudit véhicule automobile (V).

16. Terminal utilisateur (SP) selon la revendication 14 ou la revendication 15, selon lequel pour chaque unité électronique (BA, PE) un canal d'annonce (CA) est pris comme canal de référence (CArf) et selon lequel ledit terminal utilisateur (SP) est en outre adapté pour effectuer une normalisation dynamique de la mesure de la puissance en réception (RSSI) d'une trame d'annonce (ADV) d'un canal d'annonce (CA) par rapport à la mesure de la puissance en réception (RSSIrf) d'une trame d'annonce (ADV) du canal de référence (CArf) en fonction d'une valeur de compensation (OFF).

17. Unité électronique de type balise (BA) pour véhicule automobile adaptée pour communiquer selon un protocole de communication Bluetooth Low Energy (BLE) avec un terminal utilisateur (SP) pour mettre en oeuvre un procédé de localisation selon la revendication 1, ladite unité électronique (BA, PE) comprenant:
- un module de communication sans fil (MC2), qui comprend une antenne (BLE) qui sert d'émetteur/récepteur ;
- une unité de mémorisation (MEM2) ; et
- un processeur (PRO2) ;
l'unité électronique étant adaptée pour :
- diffuser une pluralité de trames d'annonce (ADV) au sein d'au moins deux canaux d'annonce (CA), chaque trame d'annonce (ADV) diffusée comprenant une information d'identification primaire (FLG1) d'une unité électronique (BA, PE), l'unité électronique étant **caractérisée en ce que** chaque trame d'annonce (ADV) diffusée comprend en outre une information d'identification secondaire (FLG2) du canal d'annonce (CA) utilisé.

## Patentansprüche

1. Verfahren zur Ortung (P) eines Nutzerendgeräts (SP) im Verhältnis zu einem Kraftfahrzeug (V), das mehrere elektronische Einheiten (BA, PE) umfasst, wobei das Nutzerendgerät (SP) und die elektronischen Einheiten (BA, PE) dazu eingerichtet sind, gemäß einem Kommunikationsprotokoll Bluetooth Low Energy^{™}(BLE) zu kommunizieren, gemäß dem das Verfahren zur Ortung (P) umfasst:
- Ausstrahlen mehrerer Meldungsrahmen (ADV) innerhalb von mindestens zwei Meldungskanälen (CA) durch jede elektronische Einheit (BA, PE), wobei jeder ausgestrahlte Meldungsrahmen (ADV) eine primäre Identifikationsinformation (FLG1) einer elektronischen Einheit (BA, PE) umfasst;
- Abtasten der mindestens zwei Meldungsrahmen (CA) durch das Nutzerendgerät (SP), um die ausgestrahlten Meldungsrahmen (ADV) zu empfangen;
- Speichern der Meldungsrahmen (ADV) durch das Nutzerendgerät (SP) in Abhängigkeit von der primären Identifikationsinformation (FLG1);
- Messen der Empfangsleistung (RSSI) der gespeicherten Meldungsrahmen (ADV) durch das Nutzerendgerät (SP);
- für jede elektronische Einheit (BA, PE) Bestimmen der Entfernung (D) vom Fahrzeug (V), in der sich das Nutzerendgerät (SP) befindet, in Abhängigkeit von den Messwerten der Empfangsleistung (RSSI)
- Berechnen der Position (POS) des Nutzerendgeräts (SP) im Verhältnis zum Kraftfahrzeug (V) in Abhängigkeit von den Entfernungen (D), die für jede elektronische Einheit (BA, PE) bestimmt werden
**dadurch gekennzeichnet, dass** jeder ausgestrahlte Meldungsrahmen (ADV) auch eine sekundäre Identifikationsinformation (FLG2) des genutzten Meldungskanals (CA) umfasst und dass das Nutzerendgerät (SP) auch die Meldungsrahmen (ADV) in Abhängigkeit von der sekundären Identifikationsinformation (FLG2) speichert.

2. Verfahren zur Ortung (P) nach Anspruch 1, wobei für jede elektronische Einheit (BA, PE) ein Meldungskanal (ADV) als Referenzkanal (CArf) genommen wird und das Verfahren zur Ortung (P) außerdem umfasst:
- dynamisches Normalisieren der Messung der Empfangsleistung (RSSI) eines Meldungsrahmens (ADV) eines Meldungskanals (CA) im Verhältnis zur Messung der Empfangsleistung (RSSIrf) eines Meldungsrahmens (ADV) des Referenzkanals (CArf) in Abhängigkeit von einem Kompensationswert (OFF).

3. Verfahren zur Ortung (P) nach Anspruch 1 oder 2, wobei die sekundäre Identifikationsinformation (FLG2) ein Zähler ist, wobei der Zähler in Abhängigkeit vom genutzten Meldungskanal (CA) inkrementiert wird.

4. Verfahren zur Ortung (P) nach einem der vorhergehenden Ansprüche 1 bis 3, wobei die mindestens zwei Meldungskanäle (CA) über ein Frequenzband von 2,4 GHz verteilt sind.

5. Verfahren zur Ortung (P) nach einem der vorhergehenden Ansprüche 1 bis 4, wobei das Kraftfahrzeug mindestens zwei elektronische Einheiten (BA, PE) umfasst.

6. Verfahren zur Ortung (P) nach einem der vorhergehenden Ansprüche 1 bis 5, wobei das Abtasten der mindestens zwei Meldungskanäle (CA) sequenziell und in einer sekundären Periode (T2) erfolgt.

7. Verfahren zur Ortung (P) nach Anspruch 6, wobei die Ausstrahlung eines Meldungsrahmens (ADV) auf den mindestens zwei Meldungskanälen (CA) sequenziell und in einer primären Periode (T1) erfolgt, die kleiner ist als die sekundäre Periode (T2).

8. Verfahren zur Ortung (P) nach Anspruch 7, wobei die primäre Periode (T1) im Wesentlichen gleich zehn Millisekunden beträgt.

9. Verfahren zur Ortung (P) nach Anspruch 7 oder Anspruch 8, wobei die sekundäre Periode (T2) im Wesentlichen fünf Sekunden beträgt.

10. Verfahren zur Ortung (P) nach einem der vorhergehenden Ansprüche 1 bis 9, wobei das Nutzerendgerät (SP) ein Mobiltelefon, ein Kennzeichen, eine Plakette, ein Tablet ist.

11. Verfahren zur Ortung (P) nach einem der vorhergehenden Ansprüche 1 bis 10, wobei die elektronische Einheit (BA) ein Peilsender ist.

12. Verfahren zur Ortung (P) nach einem der vorhergehenden Ansprüche 1 bis 11, wobei die Bestimmung der Entfernung (D) und/oder die Berechnung der Position (POS) des Nutzerendgeräts (SP) durch das Nutzerendgerät (SP) oder eine elektronische Einheit (PE) des Kraftfahrzeugs (V) erfolgt.

13. Verfahren zur Ausstrahlung (P1) mehrerer Meldungsrahmen (ADV) durch mehrere elektronische Einheiten (BA, PE), wobei jede elektronische Einheit dazu eingerichtet ist, mit einem Nutzerendgerät (SP) gemäß einem Kommunikationsprotokoll Bluetooth Low Energy^{™} (BLE) zu kommunizieren, um ein Verfahren zur Ortung nach Anspruch 1 durchzuführen, gemäß dem das Verfahren zur Ausstrahlung (P1) umfasst:
- Ausstrahlen mehrerer Meldungsrahmen (ADV) innerhalb von mindestens zwei Meldungskanälen (CA) durch jede elektronische Einheit (BA, PE), wobei jeder ausgestrahlte Meldungsrahmen (ADV) eine primäre Identifikationsinformation (FLG1) einer elektronischen Einheit (BA, PE) und eine sekundäre Identifikationsinformation (FLG2) des genutzen Meldungskanals (CA) umfasst.

14. Nutzerendgerät (SP), das dazu eingerichtet ist, gemäß einem Kommunikationsprotokoll Bluetooth Low Energy^{™}(BLE) mit mehreren elektronischen Einheiten (BA, PE) eines Kraftfahrzeugs (V) zu kommunizieren, wobei das Nutzerendgerät (SP) umfasst:
- ein Drahtlos-Kommunikationsmodul (MC1), das eine Antenne umfasst, die als Sender-Empfänger dient;
- eine Speichereinheit (MEM1); und
- einen Prozessor (PRO1);
wobei das Nutzerendgerät (PRO1) für Folgendes eingerichtet ist:
- Abtasten von mindestens zwei Meldungskanälen (CA), um Meldungsrahmen (ADV) zu empfangen, die auf den mindestens zwei Meldungskanälen (CA) ausgestrahlt werden, wobei jeder ausgestrahlte Meldungsrahmen (ADV) eine primäre Identifikationsinformation (FLG1) einer elektronischen Einheit (BA, PE) umfasst;
- Speichern der Meldungsrahmen (ADV) in Abhängigkeit von der primären Identifikationsinformation (FLG1);
- Messen der Empfangsleistung (RSSI) der Meldungsrahmen (ADV) jedes Meldungskanals (CA)
**dadurch gekennzeichnet, dass** das Nutzerendgerät (SP) außerdem für Folgendes eingerichtet ist:
- Speichern der Meldungsrahmen (ADV) auch in Abhängigkeit von einer sekundären Identifikationsinformation (FLG2) des genutzen Meldungskanals (CA), die in den Meldungsrahmen (ADV) zusätzlich zur primären Identifikationsinformation (FLG1) ausgestrahlt wird.

15. Nutzerendgerät (SP) nach Anspruch 14, wobei das Nutzerendgerät (SP) außerdem für Folgendes eingerichtet ist:
- für jede elektronische Einheit (BA, PE) Bestimmen der Entfernung (D) vom Fahrzeug (V), in der sich das Nutzerendgerät (SP) befindet, in Abhängigkeit von den Messwerten der Empfangsleistung (RSSI) und Berechnen der Position (POS) des Nutzerendgeräts (SP) im Verhältnis zum Kraftfahrzeug (V) in Abhängigkeit von den Entfernungen (D), die für jede elektronische Einheit (BA, PE) bestimmt werden; oder
- Senden der Messwerte der Empfangsleistung (RSSI) an eine elektronische Einheit (UE) des Kraftfahrzeugs (V).

16. Nutzerendgerät (SP) nach Anspruch 14 oder Anspruch 15, wobei für jede elektronische Einheit (BA, PE) ein Meldungskanal (ADV) als Referenzkanal (CArf) genommen wird und wobei das Nutzerendgerät (SP) außerdem dazu eingerichtet ist, ein dynamisches Normalisieren des Messwerts der Empfangsleistung (RSSI) eines Meldungsrahmens (ADV) eines Meldungskanals (CA) im Verhältnis zum Messwert der Empfangsleistung (RSSIrf) eines Meldungsrahmens (ADV) des Referenzkanals (CArf) in Abhängigkeit von einem Kompensationswert (OFF) durchzuführen.

17. Elektronische Einheit vom Typ Peilsender (BA) für Kraftfahrzeuge, die dazu eingerichtet ist, gemäß einem Kommunikationsprotokoll Bluetooth Low Energy (BLE) mit einem Nutzerendgerät (SP) zu kommunizieren, um ein Verfahren zur Ortung nach Anspruch 1 durchzuführen, wobei die elektronische Einheit (BA, PE) umfasst:
- ein Drahtlos-Kommunikationsmodul (MC2), das eine Antenne (BLE) umfasst, die als Sender-Empfänger dient:
- eine Speichereinheit (MEM2); und
- einen Prozessor (PRO2);
wobei die elektronische Einheit für Folgendes eingerichtet ist:
- Ausstrahlen mehrerer Meldungsrahmen (ADV) innerhalb von mindestens zwei Meldungskanälen (CA), wobei jeder ausgestrahlte Meldungsrahmen (ADV) eine primäre Identifikationsinformation (FLG1) einer elektronischen Einheit (BA, PE) umfasst, wobei die elektronische Einheit **dadurch gekennzeichnet ist, dass** jeder ausgestrahlte Meldungsrahmen (ADV) außerdem eine sekundäre Identifikationsinformation (FLG2) des genutzten Meldungskanals (CA) umfasst.

## Claims

1. Method (P) for locating a user terminal (SP) relative to a motor vehicle (V) comprising a plurality of electronic units (BA, PE), said user terminal (SP) and the electronic units (BA, PE) being adapted to communicate according to a Bluetooth Low Energy^{™} communication protocol (BLE), according to which said location method (P) comprises:
- each electronic unit (BA, PE) broadcasting a plurality of advertisement frames (ADV) within at least two advertisement channels (CA), each broadcasted advertisement frame (ADV) comprising primary identifying information (FLG1) for an electronic unit (BA, PE);
- said user terminal (SP) scanning said at least two advertisement channels (CA) in order to receive said broadcast advertisement frames (ADV);
- said user terminal (SP) storing said advertisement frames (ADV) depending on said primary identifying information (FLG1);
- said user terminal (SP) measuring the received power (RSSI) of said stored advertisement frames (ADV);
- for each electronic unit (BA, PE), determining the distance (D) at which said user terminal (SP) is found from the motor vehicle (V) depending on said received-power measurements (RSSI);
- calculating the position (POS) of the user terminal (SP) relative to the motor vehicle (V) depending on the distances (D) determined for each electronic unit (BA, PE)
**characterized in that** each broadcast advertisement frame (ADV) also comprises secondary identifying information (FLG2) for the advertisement channel (CA) used and **in that** said user terminal (SP) also stores said advertisement frames (ADV) depending on said secondary identifying information (FLG2).

2. Location method (P) according to Claim 1, according to which, for each electronic unit (BA, PE), one advertisement channel (ADV) is taken as a reference channel (CArf) and the location method (P) further comprises:
- dynamically normalizing the measurement of the received power (RSSI) of an advertisement frame (ADV) of an advertisement channel (CA) relative to the measurement of the received power (RSSIrf) of an advertisement frame (ADV) of the reference channel (CArf) depending on a compensation value (OFF).

3. Location method (P) according to Claim 1 or 2, according to which said secondary identifying information (FLG2) is a counter, said counter being incremented depending on the advertisement channel (CA) used.

4. Location method (P) according to any one of the preceding Claims 1 to 3, according to which said at least two advertisement channels (CA) are distributed over a frequency band of 2.4 GHz.

5. Location method (P) according to any one of the preceding Claims 1 to 4, according to which the motor vehicle comprises at least two electronic units (BA, PE).

6. Location method (P) according to any one of the preceding Claims 1 to 5, according to which said at least two advertisement channels (CA) are scanned sequentially and according to a secondary period (T2).

7. Location method (P) according to Claim 6, according to which each electronic unit (BA, PE) broadcasts an advertisement frame (ADV) over said at least two advertisement channels (CA) sequentially and according to a primary period (T1) which is shorter than said secondary period (T2).

8. Location method (P) according to Claim 7, according to which the primary period (T1) is substantially equal to one hundred milliseconds.

9. Location method (P) according to Claim 7 or Claim 8, according to which the secondary period (T2) is substantially equal to five seconds.

10. Location method (P) according to any one of the preceding Claims 1 to 9, according to which the user terminal (SP) is a mobile phone, an identifier, a badge or a tablet.

11. Location method (P) according to any one of the preceding Claims 1 to 10, according to which said electronic unit (BA) is a beacon.

12. Location method (P) according to any one of the preceding Claims 1 to 11, according to which said distance (D) is determined and/or the position (POS) of the user terminal (SP) is calculated by said user terminal (SP) or an electronic unit (PE) of said motor vehicle (V).

13. Method (P1) for a plurality of electronic units (BA, PE) to broadcast a plurality of advertisement frames (ADV), each electronic unit being adapted to communicate with a user terminal (SP) according to a Bluetooth Low Energy^{™}communication protocol (BLE) in order to implement a location method according to Claim 1, according to which said broadcast method (P1) comprises:
- each electronic unit (BA, PE) broadcasting a plurality of advertisement frames (ADV) within at least two advertisement channels (CA), each broadcasted advertisement frame (ADV) comprising primary identifying information (FLG1) for an electronic unit (BA, PE) and secondary identifying information (FLG2) for the advertisement channel (CA) used.

14. User terminal (SP) adapted to communicate according to a Bluetooth Low Energy communication protocol (BLE) with a plurality of electronic units (BA, PE) of a motor vehicle (V), the user terminal (SP) comprising:
- a wireless communication module (MC1), which comprises an antenna acting as a transceiver;
- a storage unit (MEM1); and
- a processor (PR01);
the user terminal (PR01) being adapted to:
- scan at least two advertisement channels (CA) in order to receive advertisement frames (ADV) broadcast over said at least two advertisement channels (CA), each broadcast advertisement frame (ADV) comprising primary identifying information (FLG1) for an electronic unit (BA, PE);
- store said advertisement frames (ADV) depending on said primary identifying information (FLG1);
- measure the received power (RSSI) of the advertisement frames (ADV) of each advertisement channel (CA)
**characterized in that** said user terminal (SP) is further adapted to:
- store said advertisement frames (ADV) depending also on secondary identifying information (FLG2) for the advertisement channel (CA) used, broadcast in said advertisement frames (ADV) in addition to said primary identifying information (FLG1).

15. User terminal (SP) according to Claim 14, according to which said user terminal (SP) is further adapted to:
- for each electronic unit (BA, PE), determine the distance (D) at which said user terminal (SP) is found from the motor vehicle (V) depending on said received-power measurements (RSSI) and calculate the position (POS) of the user terminal (SP) relative to the motor vehicle (V) depending on the distances (D) determined for each electronic unit (BA, PE); or
- send said received-power measurements (RSSI) to an electronic unit (UE) of said motor vehicle (V).

16. User terminal (SP) according to Claim 14 or Claim 15, according to which, for each electronic unit (BA, PE), one advertisement channel (CA) is taken as a reference channel (CArf) and according to which said user terminal (SP) is further adapted to dynamically normalize the measurement of the received power (RSSI) of an advertisement frame (ADV) of an advertisement channel (CA) relative to the measurement of the received power (RSSIrf) of an advertisement frame (ADV) of the reference channel (CArf) depending on a compensation value (OFF).

17. Electronic unit of beacon type (BA) for a motor vehicle, adapted to communicate according to a Bluetooth Low Energy communication protocol (BLE) with a user terminal (SP) in order to implement a location method according to Claim 1, said electronic unit (BA, PE) comprising:
- a wireless communication module (MC2), which comprises an antenna (BLE) which acts as a transceiver;
- a storage unit (MEM2); and
- a processor (PRO2);
the electronic unit being adapted to:
- broadcast a plurality of advertisement frames (ADV) within at least two advertisement channels (CA), each broadcast advertisement frame (ADV) comprising primary identifying information (FLG1) for an electronic unit (BA, PE), the electronic unit being **characterized in that** each broadcast advertisement frame (ADV) further comprises secondary identifying information (FLG2) for the advertisement channel (CA) used.
